# EUROPEAN PATENT APPLICATION

(11) **EP 4 428 940 A1**
(43) Date of publication of application: **11.09.2024**
(21) Application number: 23807965.1
(22) Date of filing: 22.05.2023
(51) Int. Cl.: H01M 4/131, H01M 4/525, H01M 4/505, H01M 4/02

(54) **POSITIVE ELECTRODE ACTIVE MATERIAL AND POSITIVE ELECTRODE INCLUDING SAME**

(30) Priority: 20.05.2022 KR 20220062288
(71) Applicant: LG Chem, Ltd., Yeongdeungpo-gu Seoul 07336 (KR)
(72) Inventor: JUNG, Won Sig, Daejeon 34122 (KR); KIM, Jong Pil, Daejeon 34122 (KR); LEE, Eung Ju, Daejeon 34122 (KR); RHEE, Tae Young, Daejeon 34122 (KR); CHOI, Hwan Young, Daejeon 34122 (KR)
(74) Representative: Hoffmann Eitle
(86) International application number: PCT/KR2023/006942
(87) International publication number: WO 2023/224446

(57) **Abstract**

The present invention relates to a positive electrode active material capable of achieving a battery with improved initial resistance characteristics and life characteristics and a positive electrode including the same, and to a positive electrode active material in a form of a single particle, wherein, after a positive electrode, which includes a positive electrode active material layer containing 80 wt% or more of the positive electrode active material based on a total weight of the positive electrode active material layer, is rolled such that density of the positive electrode active material layer after the rolling is 2.7 g/cm³ or more, when the positive electrode active material layer is analyzed by X-ray diffraction (XRD), a ratio of an area of a (003) peak to an area of all peaks identified in a 2θ range of 10° to 90° satisfies 30% or more, and a positive electrode including the same.

## Description

### TECHNICAL FIELD

### Cross-reference to Related Applications

This application claims priority from Korean Patent Application No. 10-2022-0062288, filed on May 20, 2022, the disclosure of which is incorporated by reference herein.

### Technical Field

The present invention relates to a positive electrode active material in a form of a single particle and a positive electrode including the same.

### BACKGROUND ART

Demand for secondary batteries as an energy source has been significantly increased as technology development and demand with respect to mobile devices and electric vehicles have recently increased.

A lithium secondary battery is generally composed of a positive electrode, a negative electrode, a separator, and an electrolyte, and the positive electrode and the negative electrode respectively include active materials capable of intercalating and deintercalating lithium ions.

The positive electrode active material used in the lithium secondary battery generally has a form of a spherical secondary particle which is formed by aggregation of hundreds of submicron-sized fine primary particles. However, the positive electrode active material in the form of a secondary particle has a problem in that battery characteristics are degraded as the secondary particle is broken as the aggregated primary particles are separated during repeated charge and discharge.

In order to solve this problem, development of a positive electrode active material in a form of a single particle is being actively conducted, but, when preparing an electrode using the positive electrode active material in the form of a single particle, it is difficult to align a c-axis direction, which is a main expansion direction of the positive electrode active material in the form of a single particle, as desired or quantify a degree of alignment. In a case in which the c-axis direction, which is the main expansion direction of the positive electrode active material in the form of a single particle, is not aligned and exists randomly, problems, such as a degradation in life characteristics, a decrease in capacity, and a decrease in output of the battery, occur. Accordingly, there is a need for a technique for overcoming the problems.

### DISCLOSURE OF THE INVENTION

### TECHNICAL PROBLEM

An aspect of the present invention provides a positive electrode active material capable of achieving a battery with improved initial resistance characteristics and life characteristics and a positive electrode including the same.

### TECHNICAL SOLUTION

In order to solve the above-described tasks, the present invention provides a positive electrode active material and a positive electrode including the same.
(1) The present invention provides a positive electrode active material in a form of a single particle, wherein, after a positive electrode, which includes a positive electrode active material layer containing 80 wt% or more of the positive electrode active material based on a total weight of the positive electrode active material layer, is rolled such that density of the positive electrode active material layer after the rolling is 2.7 g/cm³ or more, when the positive electrode active material layer is analyzed by XRD (X-ray diffraction), a ratio of an area of a (003) peak to an area of all peaks identified in a 2Θ range of 10° to 90° satisfies 30% or more.
(2) The present invention provides the positive electrode active material of (1) above, wherein, when the positive electrode active material layers before and after the rolling of the positive electrode are analyzed by XRD, a difference in the ratios of the area of the (003) peak to the area of all the peaks identified in a 2Θ range of 10° to 90° satisfies 10% or more.
(3) The present invention provides the positive electrode active material of (1) or (2) above, wherein the positive electrode active material in the form of a single particle has a ratio of a length in an a-axis direction to a length in a c-axis direction of greater than 1.
(4) The present invention provides the positive electrode active material of any one of (1) to (3) above, wherein the positive electrode active material in the form of a single particle is composed of 1 to 50 single crystal grains.
(5) The present invention provides the positive electrode active material of (4) above, wherein the single crystal grain has an average grain diameter (D_{EBSD}) of 0.1 um to 10 µm.
(6) The present invention provides the positive electrode active material of any one of (1) to (5) above, wherein the positive electrode active material in the form of a single particle is a lithium composite transition metal oxide containing nickel (Ni), cobalt (Co), and manganese (Mn).
(7) The present invention provides the positive electrode active material of (6) above, wherein the lithium composite transition metal oxide contains 60 mol% or more of the nickel (Ni) among total metals excluding lithium.
(8) The present invention provides the positive electrode active material of (6) or (7) above, wherein the lithium composite transition metal oxide has a composition represented by Formula 1.

   [Formula 1] LiₐNi_{b}Co_{c}Mn_{d}M¹ₑO₂

   wherein, in Formula 1,
   M¹ is at least one selected from aluminum (Al), zirconium (Zr), boron (B), tungsten (W), molybdenum (Mo), chromium (Cr), niobium (Nb), magnesium (Mg), hafnium (Hf), tantalum (Ta), lanthanum (La), titanium (Ti), strontium (Sr), barium (Ba), cerium (Ce), tin (Sn), yttrium (Y), zinc (Zn), fluorine (F), phosphorus (P), and sulfur (S), and
   0.90≤a≤1.1, 0.60≤b<1.0, 0<c<0.40, 0<d<0.40, 0≤e≤0.10, and b+c+d+e=1.
(9) The present invention provides a positive electrode including a current collector; and a positive electrode active material layer disposed on the current collector, wherein the positive electrode active material layer includes the positive electrode active material of any one of (1) to (8) above.
(10) The present invention provides the positive electrode of (9) above, wherein, when the positive electrode active material layers before and after rolling of the positive electrode are analyzed by XRD (X-ray diffraction), a difference in ratios of an area of a (003) peak to an area of all peaks identified in a 2Θ range of 10° to 90° is 100 or more.
(11) The present invention provides the positive electrode of (9) or (10) above, wherein, when an angle formed between a lithium movement path of the positive electrode active material in the form of a single particle and a parallel axis with respect to an upper surface of the current collector is θ, a value of (cosθ)² is 0.6 or more.
(12) The present invention provides the positive electrode of any one of (9) to (11) above, wherein the positive electrode active material in the form of a single particle is one in which a c-axis direction of a crystal is aligned in a direction perpendicular to an upper surface of the current collector.
(13) The present invention provides the positive electrode of any one of (9) to (12) above, wherein the positive electrode active material in the form of a single particle has a ratio of a length in an a-axis direction to a length in a c-axis direction of greater than 1.
(14) The present invention provides the positive electrode of any one of (9) to (13) above, wherein the positive electrode active material in the form of a single particle is composed of 1 to 50 single crystal grains.
(15) The present invention provides the positive electrode of (14) above, wherein the single crystal grain has an average grain diameter (D_{EBSD}) of 0.1 um to 10 um.
(16) The present invention provides the positive electrode of any one of (9) to (15) above, wherein the positive electrode active material in the form of a single particle is a lithium composite transition metal oxide containing nickel (Ni), cobalt (Co), and manganese (Mn).
(17) The present invention provides the positive electrode of (16) above, wherein the lithium composite transition metal oxide contains 60 mol% or more of the nickel (Ni) among total metals excluding lithium.
(18) The present invention provides the positive electrode of (16) or (17) above, wherein the lithium composite transition metal oxide has a composition represented by Formula 1.

   [Formula 1] LiₐNi_{b}Co_{c}Mn_{d}M¹ₑO₂

   wherein, in Formula 1,
   M¹ is at least one selected from aluminum (Al), zirconium (Zr), boron (B), tungsten (W), molybdenum (Mo), chromium (Cr), niobium (Nb), magnesium (Mg), hafnium (Hf), tantalum (Ta), lanthanum (La), titanium (Ti), strontium (Sr), barium (Ba), cerium (Ce), tin (Sn), yttrium (Y), zinc (Zn), fluorine (F), phosphorus (P), and sulfur (S), and
   0.90≤a≤1.1, 0.60≤b<1.0, 0<c<0.40, 0<d<0.40, 0≤e≤0.10, and b+c+d+e=1.

### ADVANTAGEOUS EFFECTS

After a positive electrode, which includes a positive electrode active material layer containing 80 wt% or more of a positive electrode active material according to the present invention based on a total weight of the positive electrode active material layer, is rolled such that density of the positive electrode active material layer after the rolling is 2.7 g/cm³ or more, when the positive electrode active material layer is analyzed by X-ray diffraction (XRD), since a ratio of an area of a (003) peak to an area of all peaks identified in a 2Θ range of 10° to 90° satisfies 30% or more, expansion of the positive electrode active material is suppressed when the positive electrode active material is used in the positive electrode, and thus, the positive electrode active material according to the present invention may improve initial resistance characteristics and life characteristics of a battery including the same.

After a positive electrode according to the present invention is rolled, when a positive electrode active material layer is analyzed by XRD, a ratio of an area of a (003) peak to an area of all peaks identified in a 2Θ range of 10° to 90° is 30% or more, wherein, since a c-axis direction of a crystal structure, which is a contraction/expansion direction of positive electrode active material crystals included in the positive electrode active material layer, is aligned in a direction perpendicular to an upper surface of a current collector, expansion of the positive electrode active material may be suppressed, and thus, the positive electrode according to the present invention may improve initial resistance characteristics and life characteristics of a battery including the same.

### BRIEF DESCRIPTION OF THE DRAWINGS

FIG. 1 is a scanning electron microscope (SEM) image of a positive electrode active material of Example 1.
FIG. 2 is an SEM image of a positive electrode active material of Comparative Example 1.
FIG. 3 is an SEM image of a positive electrode active material of Comparative Example 3.
FIG. 4 is X-ray diffraction (XRD) data of positive electrode active material layers before and after rolling of positive electrodes including positive electrode active materials of Examples 1 and 2 and Comparative Examples 3 and 4.
FIG. 5 is electron backscatter diffraction (EBSD) Band Contrast (BC) images of a cross section of the positive electrode including the positive electrode active material of Example 1.
FIG. 6 is a diagram illustrating an angle between a c-axis direction vector (Euler angle) of a crystal grain and a direction vector perpendicular to an electrode (= an angle between a lithium movement path (Li path) and a direction vector parallel to the electrode).

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

The term "on" in the present specification means not only a case in which one component is formed directly on an upper surface of another component, but also includes a case in which intervening components may also be present.

In the present specification, the expression "positive electrode active material in a form of a single particle" is a concept in contrast to a positive electrode active material in a form of a spherical secondary particle formed by aggregation of hundreds of primary particles which is prepared by a conventional method, wherein it means a positive electrode active material composed of 50 or less single crystal grains. Specifically, in the present invention, the positive electrode active material in the form of a single particle may be a single crystal grain, or may have a form in which 2 to 50, 2 to 40, 2 to 30, 2 to 20, 2 to 15, 2 to 10, or 2 to 5 single crystal grains are aggregated. In this case, the expression "single crystal grain" denotes the smallest unit of grains recognized when the positive electrode active material is observed through a scanning electron microscope.

An average particle diameter (D₅₀) in the present specification means a particle size on the basis of 50% in a volume cumulative particle size distribution of positive electrode active material precursor, positive electrode active material, or lithium transition metal oxide powder. The average particle diameter (D₅₀) may be measured by using a laser diffraction method. For example, after dispersing the positive electrode active material powder in a dispersion medium, the dispersion medium is introduced into a commercial laser diffraction particle size measurement instrument (e.g., Microtrac MT 3000) and then irradiated with ultrasonic waves of about 28 kHz at an output of 60 W to obtain a volume cumulative particle size distribution graph, and the average particle diameter D₅₀ may then be measured by obtaining a particle size corresponding to 50% of cumulative amount of volume.

An average grain diameter (D_{EBSD}) of the single crystal grains in the present specification means a grain size on the basis of 50% in a volume cumulative grain size distribution of the single crystal grains which is obtained through EBSD analysis using a scanning electron microscope (SEM). The EBSD analysis may obtain an image with SEM-EBSD equipment (e.g., FEI Quanta 200-EDAX Velocity Super OIM 8) and may analyze the image with an image analysis software (EDAX OIM Analysis).

Hereinafter, the present invention will be described in detail.

### Positive Electrode Active Material

The present invention provides a positive electrode active material in a form of a single particle, wherein, after a positive electrode, which includes a positive electrode active material layer containing 80 wt% or more of the positive electrode active material based on a total weight of the positive electrode active material layer, is rolled such that density of the positive electrode active material layer after the rolling is 2.7 g/cm³ or more, when the positive electrode active material layer is analyzed by X-ray diffraction (XRD), a ratio of an area of a (003) peak to an area of all peaks identified in a 2Θ range of 10° to 90° satisfies 30% or more.

In the present invention, the rolling may be performed by a roll pressing method such that electrode density of the positive electrode active material layer after the rolling is 2.7 g/cm³ or more, specifically, 2.7 g/cm³ to 3.0 g/cm³. Specifically, the rolling may be performed by roll pressing such that the electrode density of the positive electrode active material layer after the rolling is 2.7 g/cm³.

With respect to the positive electrode active material according to the present invention, after the positive electrode, which includes the positive electrode active material layer containing 80 wt% or more of the positive electrode active material based on the total weight of the positive electrode active material layer, is rolled such that the density of the positive electrode active material layer after the rolling is 2.7 g/cm³ or more, when the positive electrode active material layer is analyzed by XRD, the ratio of the area of the (003) peak to the area of all the peaks identified in a 2Θ range of 10° to 90° may satisfy 30% or more, specifically, 50%, 60% or more, 85%, or 95% or less.

A (003) plane is a direction in which lithium moves, wherein a normal direction of the (003) plane is a c-axis direction of a crystal structure (hereinafter, referred to as the c-axis direction) which is a contraction/expansion direction of a positive electrode active material crystal. Thus, in a case in which the above conditions are satisfied, when the positive electrode active material according to the present invention is used in the positive electrode, the c-axis direction of the positive electrode active material crystal included in the positive electrode active material layer is aligned in a direction perpendicular to an upper surface (or electrode surface) of a current collector, and, as a result, when the positive electrode including the positive electrode active material according to the present invention is used in a battery, since expansion of the positive electrode active material crystal in the c-axis direction is suppressed by an external case, there is an effect of improving life performance of the battery. A sample is positioned such that X-rays are incident in a direction of the positive electrode active material layer rather than a direction of the current collector during XRD measurement.

According to the present invention, when the positive electrode active material layers before and after the rolling of the positive electrode, which includes the positive electrode active material layer containing 80 wt% or more of the positive electrode active material according to the present invention based on the total weight of the positive electrode active material layer, are analyzed by XRD, a difference in the ratios of the area of the (003) peak to the area of all the peaks identified in a 2Θ range of 10° to 90° may satisfy 10%, 20%, 30% or more, or 75% or less. That is, a difference between the ratio of the area of the (003) peak to the area of all the peaks identified in a 2Θ range of 10° to 90° when the positive electrode active material layer of the positive electrode before the rolling is analyzed by XRD and the ratio of the area of the (003) peak to the area of all the peaks identified in a 2θ range of 10° to 90° when the positive electrode active material layer of the positive electrode after the rolling is analyzed by XRD may be 10%, 20%, 30% or more, or 75% or less. In this case, since the c-axis direction, which is the contraction/expansion direction of the positive electrode active material crystal, is aligned in the direction perpendicular to the upper surface (or electrode surface) of the current collector, there is the effect of improving the life performance of the battery.

When the positive electrode active material layer before the rolling of the positive electrode is analyzed by XRD, the ratio of the area of the (003) peak to the area of all the peaks identified in a 2Θ range of 10° to 90° may be 10%, 20% or more, 40%, or 49% or less.

The positive electrode active material in the form of a single particle may have an average particle diameter (D₅₀) of 0.1 um to 10 um. Specifically, the positive electrode active material in the form of a single particle may have an average particle diameter (D₅₀) of 0.1 µm, 1.0 µm, 2.0 µm or more, 5.0 µm, 6.0 µm, 7.0 µm, 8.0 µm, 9.0 µm, or 10.0 µm or less. In this case, since a rolling ratio of the battery including the positive electrode active material in the form of a single particle may be increased, performance of the battery may be further improved.

According to the present invention, the positive electrode active material in the form of a single particle may be composed of 1 to 50 single crystal grains to align a lithium movement path with the c-axis direction which is the contraction/expansion direction of the positive electrode active material crystal. Specifically, the positive electrode active material in the form of a single particle may be composed of 1 or more, 5, 10, 20, 30, 40, or 50 or less single crystal grains.

According to the present invention, the single crystal grain may have an average grain diameter (D_{EBSD}) of 0.1 µm to 10 µm, specifically, 0.1 µm, 0.2 µm or more, 5 µm, 8 µm, or 10 µm or less. In this case, aggregation or gelation of a slurry (composition for forming a positive electrode active material layer) during preparation of the electrode may be prevented, and occurrence of cracks in the grain in a process of repeating charge and discharge may be reduced.

According to the present invention, the positive electrode active material in the form of a single particle may be a lithium composite transition metal oxide containing nickel (Ni), cobalt (Co), and manganese (Mn). In this case, the lithium composite transition metal oxide may contain 60 mol% or 65 mol% or more of the nickel (Ni) among total metals excluding lithium.

According to the present invention, the lithium composite transition metal oxide may have a composition represented by the following Formula 1.

[Formula 1] LiₐNi_{b}Co_{c}Mn_{d}M¹ₑO₂

In Formula 1,
M¹ is at least one selected from aluminum (Al), zirconium (Zr), boron (B), tungsten (W), molybdenum (Mo), chromium (Cr), niobium (Nb), magnesium (Mg), hafnium (Hf), tantalum (Ta), lanthanum (La), titanium (Ti), strontium (Sr), barium (Ba), cerium (Ce), tin (Sn), yttrium (Y), zinc (Zn), fluorine (F), phosphorus (P), and sulfur (S), and
0.90≤a≤1.1, 0.60≤b<1.0, 0<c<0.40, 0<d<0.40, 0≤e≤0.10, and b+c+d+e=1.
b represents an atomic fraction of nickel among metallic elements other than lithium in the lithium composite transition metal oxide, wherein b may be 0.60, 0.65, 0.8, 0.85 or more, 0.95, or 0.98 or less.
c represents an atomic fraction of cobalt among the metallic elements other than lithium in the lithium composite transition metal oxide, wherein c may be 0.01 or more, 0.10, 0.20, 0.30, or 0.40 or less.
d represents an atomic fraction of manganese among the metallic elements other than lithium in the lithium composite transition metal oxide, wherein d may be 0.01 or more, 0.10, 0.20, 0.30, or 0.40 or less.
e represents an atomic fraction of element M¹ among the metallic elements other than lithium in the lithium composite transition metal oxide, wherein e may be 0 or more, 0.02, 0.05, or 0.10 or less.

In this case, the positive electrode active material may be included in an amount of 80 wt% to 99 wt%, more specifically, 85 wt% to 98 wt% based on the total weight of the positive electrode active material layer. When the positive electrode active material is included within the above amount range, excellent capacity characteristics may be exhibited.

### Positive Electrode

The present invention provides a positive electrode including a current collector; and a positive electrode active material layer disposed on the current collector, wherein the positive electrode active material layer includes the above-described positive electrode active material according to the present invention. That is, the present invention provides a positive electrode including a current collector; and a positive electrode active material layer disposed on the current collector, wherein the positive electrode active material layer contains 80 wt% or more of a positive electrode active material in a form of a single particle based on a total weight of the positive electrode active material layer, and, after rolling the positive electrode, when the positive electrode active material layer is analyzed by XRD, a ratio of an area of a (003) peak to an area of all peaks identified in a 2Θ range of 10° to 90° is 30% or more.

In the present invention, the rolling may be performed by a roll pressing method such that electrode density of the positive electrode active material layer after the rolling is 2.7 g/cm³ or more, specifically, 2.7 g/cm³ to 3.0 g/cm³. Specifically, the rolling may be performed by roll pressing such that the electrode density of the positive electrode active material layer after the rolling is 2.7 g/cm³.

Specifically, the positive electrode includes a positive electrode collector, and a positive electrode active material layer which is disposed on at least one surface of the positive electrode collector and includes a positive electrode active material in a form of a single particle. In addition, after rolling the positive electrode, when the positive electrode active material layer is analyzed by XRD, a ratio of an area of a (003) peak to an area of all peaks identified in a 2θ range of 10° to 90° is 30% or more. Specifically, after rolling the positive electrode, when the positive electrode active material layer is analyzed by XRD, the ratio of the area of the (003) peak to the area of all the peaks identified in a 2θ range of 10° to 90° may be 50%, 60% or more, 85%, or 95% or less.

A (003) plane is a direction in which lithium moves, wherein a normal direction of the (003) plane is a c-axis direction of a crystal structure (hereinafter, referred to as the c-axis direction) which is a contraction/expansion direction of a positive electrode active material crystal. Thus, in a case in which the above conditions are satisfied, the c-axis direction of the positive electrode active material crystal included in the positive electrode active material layer is aligned in a direction perpendicular to an upper surface (or electrode surface) of the current collector, and, as a result, when the positive electrode according to the present invention is used in a battery, since expansion of the positive electrode active material crystal in the c-axis direction is suppressed by an external case, there is an effect of improving the life performance of the battery. A sample is positioned such that X-rays are incident in a direction of the positive electrode active material layer rather than a direction of the current collector during XRD measurement.

According to the present invention, when the positive electrode active material layers before and after the rolling of the positive electrode are analyzed by XRD, a difference in the ratios of the area of the (003) peak to the area of all the peaks identified in a 2θ range of 10° to 90° may be 10%, 20%, 30% or more, or 75% or less. That is, a difference between the ratio of the area of the (003) peak to the area of all the peaks identified in a 2θ range of 10° to 90° when the positive electrode active material layer of the positive electrode before the rolling is analyzed by XRD and the ratio of the area of the (003) peak to the area of all the peaks identified in a 2θ range of 10° to 90° when the positive electrode active material layer of the positive electrode after the rolling is analyzed by XRD may be 10%, 20%, 30% or more, or 75% or less. In this case, since the c-axis direction, which is the contraction/expansion direction of the positive electrode active material crystal, is aligned in the direction perpendicular to the upper surface (or electrode surface) of the current collector, there is the effect of improving the life performance of the battery.

When the positive electrode active material layer before the rolling of the positive electrode is analyzed by XRD, the ratio of the area of the (003) peak to the area of all the peaks identified in a 2Θ range of 10° to 90° may be 10%, 20% or more, 40%, or 49% or less.

In addition, in the positive electrode, when an angle formed between the lithium movement path of the positive electrode active material in the form of a single particle and a parallel axis with respect to the upper surface of the current collector is θ, a value of (cosθ)² is 0.6 or more. The value of (cosθ)² may be 0.6 or more, 0.7, 0.8, 0.9, or 1 or less. In this case, the life performance of the battery may be further improved.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 µm, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may include a conductive agent and a binder together with the positive electrode active material in the form of a single particle.

According to the present invention, the positive electrode active material in the form of a single particle may be one in which the c-axis direction of the crystal is aligned in the direction perpendicular to the upper surface of the current collector. In this case, the c-axis direction, which is the contraction/expansion direction of the positive electrode active material crystal, is aligned in the direction perpendicular to the upper surface (or electrode surface) of the current collector, and, when the positive electrode is used in a battery, since the expansion of the positive electrode active material crystal in the c-axis direction is suppressed by the external case, the life performance may be further improved.

According to the present invention, in order for the c-axis direction, which is the contraction/expansion direction of the positive electrode active material crystal, to be aligned in the direction perpendicular to the upper surface (or electrode surface) of the current collector, the positive electrode active material in the form of a single particle may have a ratio of a length in an a-axis direction to a length in the c-axis direction of greater than 1. That is, the positive electrode active material in the form of a single particle may have a shape in which a particle length in one direction, specifically, the c-axis direction is short.

According to the present invention, the positive electrode active material in the form of a single particle may be composed of 1 to 50 single crystal grains to align the lithium movement path with the c-axis direction which is the contraction/expansion direction of the positive electrode active material crystal. Specifically, the positive electrode active material in the form of a single particle may be composed of 1 or more, 5, 10, 20, 30, 40, or 50 or less single crystal grains.

According to the present invention, the single crystal grain may have an average grain diameter (D_{EBSD}) of 0.1 um to 10 um, specifically, 0.1 um, 0.2 um or more, 5 um, 8 um, or 10 um or less. In this case, the aggregation or gelation of the slurry (composition for forming a positive electrode active material layer) during the preparation of the electrode may be prevented, and the occurrence of the cracks in the grain in the process of repeating charge and discharge may be reduced.

According to the present invention, the positive electrode active material in the form of a single particle may be a lithium composite transition metal oxide containing nickel (Ni), cobalt (Co), and manganese (Mn). In this case, the lithium composite transition metal oxide may contain 60 mol% or 65 mol% or more of the nickel (Ni) among total metals excluding lithium.

According to the present invention, the lithium composite transition metal oxide may have a composition represented by the following Formula 1.

[Formula 1] LiₐNi_{b}Co_{c}Mn_{d}M¹ₑO₂

In Formula 1,
M¹ is at least one selected from Al, Zr, B, W, Mo, Cr, Nb, Mg, Hf, Ta, La, Ti, Sr, Ba, Ce, Sn, Y, Zn, F, P, and S, and
0.90≤a≤1.1, 0.60≤b<1.0, 0<c<0.40, 0<d<0.40, 0≤e≤0.10, and b+c+d+e=1.
b represents an atomic fraction of nickel among metallic elements other than lithium in the lithium composite transition metal oxide, wherein b may be 0.60, 0.65, 0.8, 0.85 or more, 0.95, or 0.98 or less.
c represents an atomic fraction of cobalt among the metallic elements other than lithium in the lithium composite transition metal oxide, wherein c may be 0.01 or more, 0.10, 0.20, 0.30, or 0.40 or less.
d represents an atomic fraction of manganese among the metallic elements other than lithium in the lithium composite transition metal oxide, wherein d may be 0.01 or more, 0.10, 0.20, 0.30, or 0.40 or less.
e represents an atomic fraction of element M¹ among the metallic elements other than lithium in the lithium composite transition metal oxide, wherein e may be 0 or more, 0.02, 0.05, or 0.10 or less.

In this case, the positive electrode active material may be included in an amount of 80 wt% to 99 wt%, more specifically, 85 wt% to 98 wt% based on the total weight of the positive electrode active material layer. When the positive electrode active material is included within the above amount range, excellent capacity characteristics may be exhibited.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, KETJEN BLACK, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 1 wt% to 30 wt% based on the total weight of the positive electrode active material layer.

The binder improves the adhesion between the positive electrode active material particles and the adhesion between the positive electrode active material and the current collector. Specific examples of the binder may be polyvinylidene fluoride (PVDF), polyvinylidene fluoridehexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be prepared according to a typical method of preparing a positive electrode except that the above-described positive electrode active material is used. Specifically, a composition for forming a positive electrode active material layer (slurry), which is prepared by dissolving or dispersing the positive electrode active material as well as optionally the binder and the conductive agent in a solvent, is coated on the positive electrode collector, and the positive electrode may then be prepared by drying and rolling the coated positive electrode collector. In this case, types and amounts of the positive electrode active material, the binder, and the conductive agent are the same as those previously described. Also, as another method, the positive electrode may be prepared by casting the composition for forming a positive electrode active material layer on a separate support and then laminating a film separated from the support on the positive electrode collector.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of the slurry and manufacturing yield, and may allow to have a viscosity that may provide excellent thickness uniformity during the subsequent coating for the preparation of the positive electrode.

### Lithium Secondary Battery

Furthermore, in the present invention, an electrochemical device including the positive electrode may be prepared. The electrochemical device may specifically be a battery or a capacitor, and may more specifically be a lithium secondary battery.

The lithium secondary battery specifically includes a positive electrode, a negative electrode disposed to face the positive electrode, a separator disposed between the positive electrode and the negative electrode, and an electrolyte, and, since the positive electrode is the same as described above, detailed descriptions thereof will be omitted and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a nonwoven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiOp(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder may typically be added in an amount of 0.1 wt% to 10 wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a nitrilebutadiene rubber, a fluoro rubber, and various copolymers thereof.

The conductive agent is a component for further improving conductivity of the negative electrode active material, wherein the conductive agent may be added in an amount of 10 wt% or less, preferably, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, KETJENBLACK, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

The negative electrode active material layer may be prepared by coating a composition for forming a negative electrode active material layer, which is prepared by dissolving or dispersing optionally the binder and the conductive agent as well as the negative electrode active material in a solvent, on the negative electrode collector and drying the coated negative electrode collector, or may be prepared by casting the composition for forming a negative electrode active material layer on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions is preferable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an esterbased solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a doublebond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 2.0 M. Since the electrolyte may have appropriate conductivity and viscosity when the concentration of the lithium salt is included within the above range, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 5 wt% based on a total weight of the electrolyte.

As described above, since the lithium secondary battery including the positive electrode active material according to the present invention stably exhibits excellent discharge capacity, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Examples and Comparative Examples

### Example 1

A positive electrode active material precursor, which had a composition represented by Ni_{0.95}Co_{0.03}Mn_{0.02}(OH)₂ and had an average particle diameter (D₅₀) of 3.5 um, and LiOH were mixed in a molar ratio of 1:1.05 and primarily sintered at a temperature of 870°C for 9 hours in an oxygen atmosphere to prepare a pre-sintered product, and the pre-sintered product was ground and then secondarily sintered at a temperature of 750°C for 9 hours in an oxygen atmosphere to prepare a lithium composite transition metal oxide in a form of a single particle which had a composition represented by LiNi_{0.95}Co_{0.03}Mn_{0.02}O₂.

A mixture was prepared by mixing the prepared lithium composite transition metal oxide in the form of a single particle with powder-type Co(OH)₂ (Huayou Cobalt Co., Ltd.) at a molar ratio of 1:0.02. The mixture was heat-treated at a temperature of 700°C for 5 hours in an oxygen atmosphere to prepare a positive electrode active material in a form of a single particle.

### Example 2

A positive electrode active material precursor, which had a composition represented by Ni_{0.88}Co_{0.03}Mn_{0.09}(OH)₂ and had an average particle diameter (D₅₀) of 3.5 um, and LiOH were mixed in a molar ratio of 1:1.05 and primarily sintered at a temperature of 900°C for 9 hours in an oxygen atmosphere to prepare a pre-sintered product, and the pre-sintered product was ground and then secondarily sintered at a temperature of 780°C for 9 hours in an oxygen atmosphere to prepare a lithium composite transition metal oxide in a form of a single particle which had a composition represented by LiNi_{0.88}Co_{0.03}Mn_{0.09}O₂.

A mixture was prepared by mixing the prepared lithium composite transition metal oxide in the form of a single particle with powder-type Co(OH)₂ (Huayou Cobalt Co., Ltd.) at a molar ratio of 1:0.02. The mixture was heat-treated at a temperature of 700°C for 5 hours in an oxygen atmosphere to prepare a positive electrode active material in a form of a single particle.

### Comparative Example 1

A positive electrode active material precursor, which had a composition represented by Ni_{0.95}Co_{0.03}Mn_{0.02}(OH)₂ and had an average particle diameter (D₅₀) of 3.5 um, and LiOH were mixed in a molar ratio of 1:1.05 and primarily sintered at a temperature of 800°C for 9 hours in an oxygen atmosphere to prepare a pre-sintered product, and the pre-sintered product was ground and then secondarily sintered at a temperature of 750°C for 9 hours in an oxygen atmosphere to prepare a lithium composite transition metal oxide having a composition represented by LiNi_{0.95}Co_{0.03}Mn_{0.02}O₂ which was an intermediate form between a form of a single particle and a form of a secondary particle.

A mixture was prepared by mixing the prepared lithium composite transition metal oxide in the form of a single particle with powder-type Co(OH)₂ (Huayou Cobalt Co., Ltd.) at a molar ratio of 1:0.02. The mixture was heat-treated at a temperature of 700°C for 5 hours in an oxygen atmosphere to prepare a positive electrode active material which was an intermediate form between a form of a single particle and a form of a secondary particle.

### Comparative Example 2

A positive electrode active material precursor, which had a composition represented by Ni_{0.88}Co_{0.03}Mn_{0.09}(OH)₂ and had an average particle diameter (D₅₀) of 3.5 um, and LiOH were mixed in a molar ratio of 1:1.05 and primarily sintered at a temperature of 820°C for 9 hours in an oxygen atmosphere to prepare a pre-sintered product, and the pre-sintered product was ground and then secondarily sintered at a temperature of 780°C for 9 hours in an oxygen atmosphere to prepare a lithium composite transition metal oxide having a composition represented by LiNi_{0.88}Co_{0.03}Mn_{0.09}O₂ which was an intermediate form between a form of a single particle and a form of a secondary particle.

A mixture was prepared by mixing the prepared lithium composite transition metal oxide in the form of a single particle with powder-type Co(OH)₂ (Huayou Cobalt Co., Ltd.) at a molar ratio of 1:0.02. The mixture was heat-treated at a temperature of 700°C for 5 hours in an oxygen atmosphere to prepare a positive electrode active material which was an intermediate form between a form of a single particle and a form of a secondary particle.

### Comparative Example 3

A positive electrode active material precursor, which had a composition represented by Ni_{0.95}Co_{0.03}Mn_{0.02}(OH)₂ and had an average particle diameter (D₅₀) of 3.5 um, and LiOH were mixed in a molar ratio of 1:1.05 and sintered at a temperature of 750°C for 9 hours in an oxygen atmosphere to prepare a lithium composite transition metal oxide having a composition represented by LiNi_{0.95}Co_{0.03}Mn_{0.02}O₂.

A mixture was prepared by mixing the prepared lithium composite transition metal oxide in the form of a single particle with powder-type Co(OH)₂ (Huayou Cobalt Co., Ltd.) at a molar ratio of 1:0.02. The mixture was heat-treated at a temperature of 700°C for 5 hours in an oxygen atmosphere to prepare a positive electrode active material in a form of a secondary particle.

### Comparative Example 4

A positive electrode active material precursor, which had a composition represented by Ni_{0.88}Co_{0.03}Mn_{0.09}(OH)₂ and had an average particle diameter (D₅₀) of 3.5 um, and LiOH were mixed in a molar ratio of 1:1.05 and sintered at a temperature of 800°C for 9 hours in an oxygen atmosphere to prepare a lithium composite transition metal oxide having a composition represented by LiNi_{0.88}Co_{0.03}Mn_{0.09}O₂.

A mixture was prepared by mixing the prepared lithium composite transition metal oxide in the form of a single particle with powder-type Co(OH)₂ (Huayou Cobalt Co., Ltd.) at a molar ratio of 1:0.02. The mixture was heat-treated at a temperature of 700°C for 5 hours in an oxygen atmosphere to prepare a positive electrode active material in a form of a secondary particle.

### Comparative Example 5

A positive electrode active material precursor, which had a composition represented by Ni_{0.88}Co_{0.03}Mn_{0.09}(OH)₂ and had an average particle diameter (D₅₀) of 3.5 um, and LiOH were mixed in a molar ratio of 1:1.05 and sintered at a temperature of 840°C for 9 hours in an oxygen atmosphere to prepare a lithium composite transition metal oxide having a composition represented by LiNi_{0.88}Co_{0.03}Mn_{0.09}O₂.

A mixture was prepared by mixing the prepared lithium composite transition metal oxide with powder-type Co(OH)₂ (Huayou Cobalt Co., Ltd.) at a molar ratio of 1:0.02. The mixture was heat-treated at a temperature of 700°C for 5 hours in an oxygen atmosphere to prepare a positive electrode active material in a form of a secondary particle.

### Experimental Examples

### Experimental Example 1: SEM Image Analysis

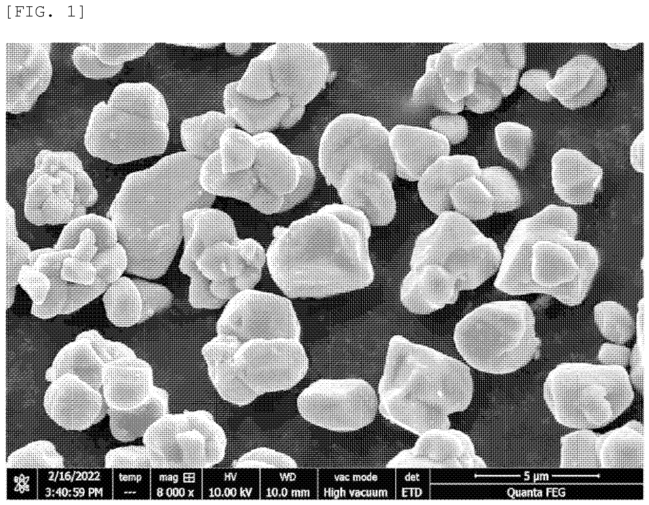

The positive electrode active materials of Example 1, Comparative Example 1, and Comparative Example 3 were measured with a scanning electron microscope (SEM) (JEOL JSM-7900F; accelerating voltage 20 kV) to obtain SEM images, respectively, and these are illustrated in FIG. 1, FIG. 2, and FIG. 3, respectively.

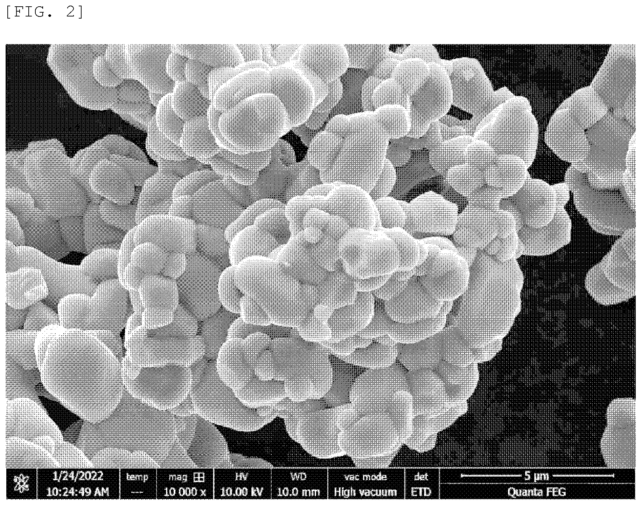

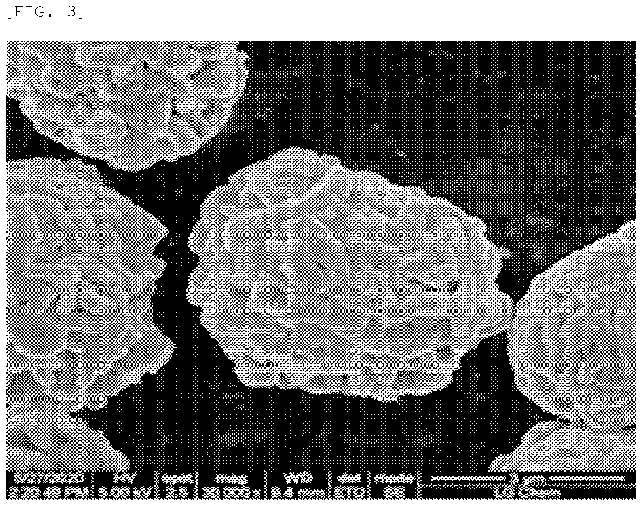

FIG. 1 is the SEM image of the positive electrode active material of Example 1, FIG. 2 is the SEM image of the positive electrode active material of Comparative Example 1, and FIG. 3 is the SEM image of the positive electrode active material of Comparative Example 3.

Referring to FIGS. 1 to 3, it may be confirmed that the positive electrode active material of Example 1 was in the form of a single particle, wherein it was composed of one to a few grains (average grain diameter (D_{EBSD}) was 1.5 pm), but the positive electrode active material of Comparative Example 3 was in the form of a secondary particle, and the positive electrode active material of Comparative Example 1 was the intermediate form between the form of a single particle and the form of a secondary particle which was defined in the present invention.

### Experimental Example 2: XRD Data Analysis

### (Preparation of Electrode Sample for Analysis)

A composition for forming a positive electrode active material layer was prepared by adding each of the positive electrode active materials prepared in Examples 1 and 2 and Comparative Examples 1 to 4, a carbon black conductive agent (Denka Company Limited, Denka Black), and a PVdF binder (Kureha Corporation, KF1300) to a N-methylpyrrolidone (NMP) solvent (Daejung Chemicals & Metals, Co., Ltd.) at a weight ratio of 95:3:2.

A positive electrode active material layer was formed by coating one surface of a 20 um thick aluminum foil current collector with the composition for forming a positive electrode active material layer and drying the coated current collector at a temperature of 135°C for 3 hours. Subsequently, a positive electrode was prepared by rolling the positive electrode active material layer by a roll pressing method such that electrode density of the positive electrode active material layer after the rolling was 2.7 g/cm³.

For reference, the electrode density is a value obtained by dividing a mass (excluding weights of the conductive agent, the binder, and the current collector) of the positive electrode active material per unit area of the electrode by a unit volume (thickness excluding the current collector × unit area) of the electrode.

### (XRD Measurement and Analysis)

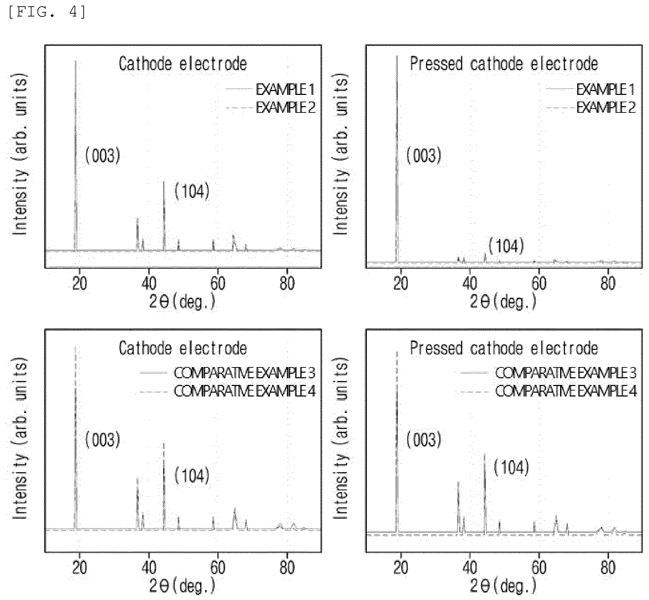

XRD data of the positive electrode active material layers before and after rolling of each of the positive electrodes including the positive electrode active materials of Examples 1 and 2 and Comparative Examples 1 to 4 were obtained by using Panalytical's Empyrean XRD equipment (Cutarget, voltage: 45 kV, current: 40 mA, 20: 10° to 90°), and these are illustrated in FIG. 4. In addition, a value of a ratio of an area of a (003) peak to an area of all peaks identified in a 2Θ range of 10° to 90° is presented in Table 1 below.

**[Table 1]**

| | Ratio of the area of the (003) peak to the area of all the peaks identified in a 2θ range of 10° to 90° (%) | |
|---|---|---|
| | Before rolling | After rolling |
| Example 1 | 38.27 | 72.86 |
| Example 2 | 33.07 | 69.29 |
| Comparative Example 1 | 28.92 | 34.05 |
| Comparative Example 2 | 29.02 | 33.41 |
| Comparative Example 3 | 26.93 | 26.92 |
| Comparative Example 4 | 27.84 | 27.88 |
| Comparative Example 5 | 28.08 | 31.22 |

Referring to FIG. 4, with respect to Examples 1 and 2, it may be confirmed that both the ratios of the area of the (003) peak before and after rolling were higher than those of Comparative Examples 3 and 4. Particularly, it may be confirmed that, since the grains were rearranged during the rolling process, a difference between before and after rolling was very large and values after rolling were also significantly different from those of Comparative Examples 3 and 4.

### Experimental Example 3: EBSD Data Analysis

An electrode sample for analysis was prepared in the same manner as in Experimental Example 2, the positive electrode was irradiated with an argon (Ar) ion beam by using HITACHI's IM5000 (accelerating voltage: 6 kV) and cut by an ion milling method to obtain a cross section of the positive electrode, and the cross section of the positive electrode was measured and analyzed using JSM-7900F by JEOL Ltd. (accelerating voltage: 20 kV). AZtecCrystal by Oxford Instruments was used as an image processing-EBSD quantification analysis software.

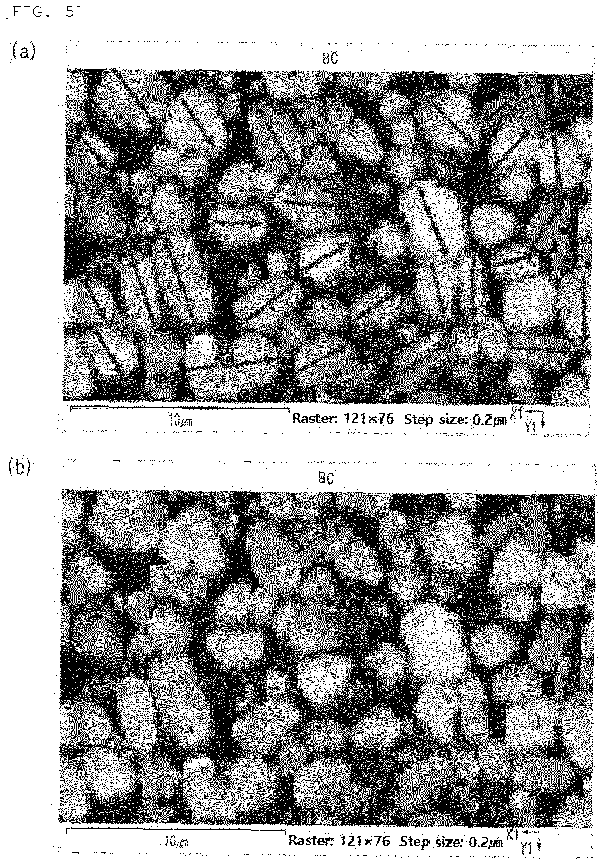

FIG. 5 is electron backscatter diffraction (EBSD) Band Contrast (BC) images of the cross section of the positive electrode including the positive electrode active material of Example 1, wherein a major axis of a grain was indicated by a red arrow in FIG. 5(a), and a crystal grain model according to a crystal orientation was indicated as a hexagonal column shape (long direction of the crystal structure model denotes the c-axis) in FIG. 5(b) . In the EBSD BC images, a vertical direction (Y1) is a direction perpendicular to the electrode, and a horizontal direction (X1) is a direction parallel to the electrode.

For reference, the images of FIG. 5 are cross-sections, wherein an actual three-dimensional grain has a shape in which a grain length in an arbitrary axis direction is longer than those of the other two axes.

An angle between a c-axis direction vector (Euler angle) of all crystal grains (about 50 to 100) in the image obtained through EBSD analysis and a direction vector perpendicular to the electrode (= an angle between the lithium movement path (Li path) and a direction vector parallel to the electrode) was defined as θ, a value of (cosθ)² of each crystal grain was calculated, an average of the values of (cosθ)² of all crystal grains is presented in Table 2 below, and a degree of alignment between the lithium movement path of the positive electrode active material and the electrode was confirmed.

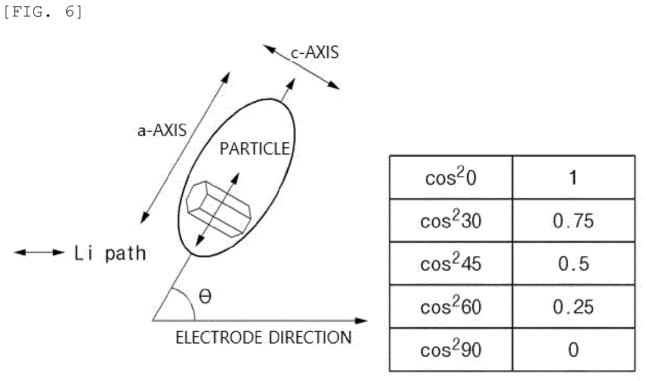

The angle between the c-axis direction vector (Euler angle) of the crystal grain and the direction vector perpendicular to the electrode (= the angle between the lithium movement path (Li path) and the direction vector parallel to the electrode) is illustrated in FIG. 6, and, as the value of (cosθ)² was closer to 1, it may be considered that the lithium movement path and the direction of the electrode surface were parallel.

**[Table 2]**

| | Value of (cosθ)² |
|---|---|
| Example 1 | 0.71 |
| Example 2 | 0.68 |
| Comparative Example 1 | 0.54 |
| Comparative Example 2 | 0.51 |
| Comparative Example 3 | 0.43 |
| Comparative Example 4 | 0.48 |
| Comparative Example 5 | 0.55 |

### Experimental Example 4: Battery Characteristics Evaluation

### (Half-cell Preparation)

A composition for forming a positive electrode active material layer was prepared by adding each of the positive electrode active materials prepared in Examples 1 and 2 and Comparative Examples 1 to 4, a carbon black conductive agent (Denka Company Limited, Denka Black), and a PVdF binder (Kureha Corporation, KF1300) to a N-methylpyrrolidone (NMP) solvent (Daejung Chemicals & Metals, Co., Ltd.) at a weight ratio of 95:3:2.

A positive electrode active material layer was formed by coating one surface of a 20 um thick aluminum foil current collector with the composition for forming a positive electrode active material layer and drying the coated current collector at a temperature of 135°C for 3 hours. Subsequently, a positive electrode was prepared by rolling the positive electrode active material layer by a roll pressing method such that porosity of the positive electrode active material layer after the rolling was 20 vol%.

A half-cell was prepared by using lithium metal as a negative electrode together with the positive electrode.

### (1) Evaluation of Initial Resistance (DCIR)

After each of the above-prepared half-cells was charged at a constant current (CC) of 0.2 C to 4.25 V at 25°C and then charged at a constant voltage (CV) of 4.25 V until the charging current was 0.05 mAh (cut-off current), initial resistance was obtained by dividing a difference between a voltage at 10 seconds after the start of discharging and a voltage in a fully-charged state, which was obtained while discharging the cell at a constant current of 0.2 C for 10 seconds, by a current, and the results thereof are presented in Table 3 below.

### (2) Evaluation of Capacity Retention and Resistance Increase Rate

After each of the above-prepared half-cells was charged at a constant current (CC) of 0.2 C to 4.25 V at 25°C and then charged at a constant voltage (CV) of 4.25 V until the charging current was 0.05 mAh (cut-off current), each half-cell was left standing for 20 minutes and then discharged at a constant current of 0.2 C to 2.5 V.

Thereafter, the cell was transferred to a chamber at 45°C, and charging of the cell at a constant current of 0.33 C to 4.25 V, charging of the cell at a constant voltage (CV) of 4.25 V until the charging current was 0.05 mAh (cut-off current), and discharging of the cell at a constant current of 0.33 C to 2.5 V were set as one cycle and 30 cycles of the charging and discharging were performed. In this case, a percentage of discharge capacity in a 30^{th} cycle to discharge capacity in a 1^{st} cycle was set as a capacity retention and the capacity retentions are presented in Table 3 below. Also, a percentage of a direct current internal resistance (DCIR) value in the 30^{th} cycle to a DCIR value in the 1^{st} cycle was set as a resistance increase rate and the resistance increase rates are presented in Table 3 below. For reference, a DCIR value in an n^{th} cycle was a value calculated by dividing a difference between a voltage at 10 seconds after the start of discharging and a voltage in a fully-charged state, which was obtained while discharging the cell at a constant current of 0.33 C to 2.5 V, by a current in the n^{th} cycle.

**[Table 3]**

| | Initial resistance (Ω) | Capacity retention (%) | Resistance increase rate (%) |
|---|---|---|---|
| Example 1 | 17.9 | 96.6 | 141.3 |
| Example 2 | 19.2 | 96.8 | 143.2 |
| Comparative Example 1 | 20.7 | 95.1 | 155.4 |
| Comparative Example 2 | 21.2 | 95.3 | 151.8 |
| Comparative Example 3 | 21.3 | 95.2 | 155.6 |
| Comparative Example 4 | 21.3 | 95.4 | 144.2 |
| Comparative Example 5 | 19.8 | 88.7 | 163.2 |

Referring to Tables 1 to 3, with respect to the positive electrodes including the positive electrode active materials in the form of a single particle of Examples 1 and 2 in which, when the positive electrode active material layers were analyzed by XRD after rolling the positive electrodes, the ratios of the area of the (003) peak to the area of all the peaks identified in a 2Θ range of 10° to 90° were 30% or more, it may be confirmed that initial resistance characteristics and life characteristics were better than those of the positive electrodes including the positive electrode active materials in the form of a secondary particle of Comparative Examples 3 and 4 and the positive electrodes including the positive electrode active materials in the intermediate form between the form of a single particle and the form of a secondary particle of Comparative Examples 1 and 2. Also, with respect to the positive electrodes including the positive electrode active materials in the form of a single particle of Examples 1 and 2, it may be confirmed that the life characteristics were significantly better than those of the positive electrode active material of Comparative Example 5 in which the form of a secondary particle, in which hundreds of primary particles were aggregated, and the form of a single particle were present in a mixed state.

## Claims

1. A positive electrode active material in a form of a single particle,
wherein, after a positive electrode, which includes a positive electrode active material layer containing 80 wt% or more of the positive electrode active material based on a total weight of the positive electrode active material layer, is rolled, a density of the positive electrode active material layer after the rolling is 2.7 g/cm³ or more, and
when the positive electrode active material layer is analyzed by XRD (X-ray diffraction), a ratio of an area of a (003) peak to an area of all peaks identified in a 2θ range of 10° to 90° satisfies 30% or more.

2. The positive electrode active material of claim 1, wherein, when the positive electrode active material layers before and after the rolling of the positive electrode are analyzed by XRD, a difference in the ratios of the area of the (003) peak to the area of the all peaks identified in a 2θ range of 10° to 90° satisfies 10% or more.

3. The positive electrode active material of claim 1, wherein the positive electrode active material in the form of the single particle has a ratio of a length in an a-axis direction to a length in a c-axis direction of greater than 1.

4. The positive electrode active material of claim 1, wherein the positive electrode active material in the form of the single particle is composed of 1 to 50 single crystal grains.

5. The positive electrode active material of claim 4, wherein the single crystal grain has an average grain diameter (D_{EBSD}) ranging from 0.1 um to 10 um.

6. The positive electrode active material of claim 1, wherein the positive electrode active material in the form of the single particle is a lithium composite transition metal oxide containing nickel (Ni), cobalt (Co), and manganese (Mn).

7. The positive electrode active material of claim 6, wherein the lithium composite transition metal oxide comprises 60 mol% or more of the nickel (Ni) among total metals excluding lithium.

8. The positive electrode active material of claim 6, wherein the lithium composite transition metal oxide has a composition represented by Formula 1:
[Formula 1] LiₐNi_{b}Co_{c}Mn_{d}M¹ₑO₂
wherein, in Formula 1,
M¹ is at least one selected from aluminum (Al), zirconium (Zr), boron (B), tungsten (W), molybdenum (Mo), chromium (Cr), niobium (Nb), magnesium (Mg), hafnium (Hf), tantalum (Ta), lanthanum (La), titanium (Ti), strontium (Sr), barium (Ba), cerium (Ce), tin (Sn), yttrium (Y), zinc (Zn), fluorine (F), phosphorus (P), and sulfur (S), and
0.90≤a≤1.1, 0.60≤b<1.0, 0<c<0.40, 0<d<0.40, 0≤e≤0.10, and b+c+d+e=1.

9. A positive electrode comprising:
a current collector; and
a positive electrode active material layer disposed on the current collector,
wherein the positive electrode active material layer comprises the positive electrode active material of claim 1.

10. The positive electrode of claim 9, wherein, when the positive electrode active material layers before and after rolling of the positive electrode are analyzed by XRD (X-ray diffraction), a difference in ratios of an area of a (003) peak to an area of all peaks identified in a 2θ range of 10° to 90° is from 10% or more.

11. The positive electrode of claim 9, wherein, when an angle formed between a lithium movement path of the positive electrode active material in the form of the single particle and a parallel axis with respect to an upper surface of the current collector is θ, a value of (cosθ)² is 0.6 or more.

12. The positive electrode of claim 9, wherein the positive electrode active material in the form of the single particle has a c-axis direction of a crystal aligned in a direction perpendicular to an upper surface of the current collector.

13. The positive electrode of claim 9, wherein the positive electrode active material in the form of the single particle has a ratio of a length in an a-axis direction to a length in a c-axis direction of greater than 1.

14. The positive electrode of claim 9, wherein the positive electrode active material in the form of the single particle is composed of 1 to 50 single crystal grains.

15. The positive electrode of claim 14, wherein the single crystal grain has an average grain diameter (D_{EBSD}) ranging from 0.1 um to 10 um.

16. The positive electrode of claim 9, wherein the positive electrode active material in the form of the single particle is a lithium composite transition metal oxide containing nickel (Ni), cobalt (Co), and manganese (Mn).

17. The positive electrode of claim 16, wherein the lithium composite transition metal oxide comprises 60 mol% or more of the nickel (Ni) among total metals excluding lithium.

18. The positive electrode of claim 16, wherein the lithium composite transition metal oxide has a composition represented by Formula 1:
[Formula 1] LiₐNi_{b}Co_{c}Mn_{d}M¹ₑO₂
wherein, in Formula 1,
M¹ is at least one selected from aluminum (Al), zirconium (Zr), boron (B), tungsten (W), molybdenum (Mo), chromium (Cr), niobium (Nb), magnesium (Mg), hafnium (Hf), tantalum (Ta), lanthanum (La), titanium (Ti), strontium (Sr), barium (Ba), cerium (Ce), tin (Sn), yttrium (Y), zinc (Zn), fluorine (F), phosphorus (P), and sulfur (S), and
0.90≤a≤1.1, 0.60≤b<1.0, 0<c<0.40, 0<d<0.40, 0≤e≤0.10, and b+c+d+e=1.
